# EUROPÄISCHE PATENTSCHRIFT

(11) **EP 0 734 855 B1**
(45) Veröffentlichungstag und Bekanntmachung des Hinweises auf die Patenterteilung: **22.12.1999**
(21) Anmeldenummer: 96102396.7
(22) Anmeldetag: 17.02.1996
(51) Int. Cl.: B32B 27/34, A22C 13/00

(54) **Mehrschichtige, tiefziehbare, siegelbare Folie und deren Verwendung bei der Herstellung von Kochpökelwaren**
Multilayered, deep drawable, sealable film and its use for the production of salted cook-in products
Feuille multicouche, scellable ayant l'aptitude à l'emboutissage profond et son utilisation pour la fabrication de produits cuits et saumurés

(30) Priorität: 02.03.1995 DE 19507215
(43) Veröffentlichungstag der Anmeldung: 02.10.1996
(73) Patentinhaber: WOLFF WALSRODE AG, 29655 Walsrode (DE)
(72) Erfinder: Gasse, Andreas S., Dr., D-29664 Walsrode (DE); Henze-Wethkamp, Heinrich, Dr., Burr Ridge, IL. 605 521-7544 (US); Klein, Rudi, D-29664 Walsrode/Krelingen (DE)
(74) Vertreter: Pettrich, Klaus-Günter, Dr.

(56) Entgegenhaltungen:
- EP-A- 0 526 814
- EP-A- 0 573 306
- DATABASE WPI Section Ch, Week 8152 Derwent Publications Ltd., London, GB; Class A94, AN 81-95717D XP002017942 & JP-A-56 146 756 (ASAHI DOW KK) , 14.November 1981
- DATABASE WPI Section Ch, Week 9316 Derwent Publications Ltd., London, GB; Class A14, AN 93-128997 XP002017943 & JP-A-05 064 866 (MITSUI DU PONT POLYCHEMICAL) , 19.März 1993
- DATABASE WPI Section Ch, Week 8403 Derwent Publications Ltd., London, GB; Class A32, AN 84-013933 XP002017944 & JP-A-58 205 765 (MITSUI POLYCHEMICAL) , 30.November 1983

## Beschreibung

Die vorliegende Erfindung betrifft allgemein eine mehrschichtige Folie, die tiefziehbar und siegelbar ist. Die Folie eignet sich besonders für die Herstellung von Kochpökelwaren.

Zahlreiche Fleischprodukt wie z.B. Kochpökelwaren werden durch Hitzebehandlung (Kochen, Pasteurisieren, usw.) des Produktes in einem Behältnis wie z.B. einer Folie hergestellt.

Die hierfür eingesetzten Folien werden allgemein als Cook in-Folien bezeichnet. Die Herstellung von Kochpökelwaren und dabei angewandte Verpackungsverfahren sind in der Literatur beschrieben (E. Wirth, u. a.: "Richtwerte der Fleischtechnologie", Deutscher Fachverlag (1990); Bundesanstalt für Fleischforschung: "Technologie der Kochwurst und Kochpökelware", Kulmbach (1988)).

Die Verwendung von Folien für diese Anwendung ist seit langem bekannt. Häufig werden die Folien auf Standardtiefziehmaschinen zu einer geeigneten Form tiefgezogen. In diese so gebildete Vertiefung (Mulde) wird das vorbereitete Füllgut hineinbefördert z.B. hineingelegt. Anschließend wird durch eine zusätzliche Folie (Deckelfolie) die gefüllte Mulde verschlossen, indem gegebenenfalls ein Unterdruck auf das Volumen zwischen Deckel und dem Füllgut in der Mulde angelegt wird und die Deckelfolie durch Temperaturanwendung mit der Muldenfolie versiegelt, d. h. fest verbunden wird. Im allgemeinen schließt sich ein Schneideprozeß an, bei dem die noch zusammenhängenden Verpackungen in einzelne Verpackungen aufgetrennt werden.

Zur weiteren Verarbeitung wird das Füllgut in der Verpackung belassen und einem Koch- oder Pasteurisierungsprozeß unterworfen.

Zum Teil wird die Verpackung zunächst für kurze Zeit z.B. durch Eintauchen in ein temperiertes Wasserbad erwärmt, um ein verstärktes Schrumpfen der Folienverpackung an das Füllgut zu erreichen.

Die Zeit - Temperaturbedingungen des Kochvorgangs bzw. Pasteurisierens in einer Folienverpackung sind im allgemeinen ein lang andauerndes, langsames Erwärmen bzw. ein Eintauchen in fast siedendes Wasser oder das Erwärmen in Heißdampf. Die Behandlung kann auch im Autoklaven erfolgen. Zusätzlich kann die gesamte Verpackung von einer geeigneten Form z.B. aus Metall oder Kunststoff umschlossen sein. Zeiträume von 12 Stunden und Temperaturen von 70 bis 95°C können üblicherweise erreicht werden. Die Folien müssen unter diesen Bedingungen gegenüber Delamination beständig sein und eine ausreichende Festigkeit der Siegelnähte aufweisen.

Ein gutes Schrumpfvermögen der Folien während des Koch- bzw. Pasteurisierprozesses ist von Vorteil, da durch das enge Anliegen der Folienverpackung ein Austreten von Flüssigkeit und die Bildung von Gelee- und Fettabsatz deutlich vermindert wird. Hierdurch kann die Gesamtausbeute des zu verkaufenden Produktes erhöht werden. Durch ein gutes Haftvermögen der innen liegenden Folienschicht mit der Oberfläche des Füllgutes - dieses Haftvermögen wird als Bräthaftung bezeichnet - kann ebenfalls das Austreten von Flüssigkeit deutlich vermindert werden. Jedoch darf die Bräthaftung nicht so stark sein, daß die Oberfläche des Füllgutes unerwünscht beschädigt wird und z.B. Fleischstücke herausgerupft werden. Daher ist eine leichte Bräthaftung erstrebenswert.

Aus EP 0127 296 ist eine für das Kochen in der Verpackung geeignete Mehrschichtfolie bekannt, die mit einer ionisierenden Strahlung behandelt ist, um eine Haftung zum Fleischprodukt während des Kochen zu erreichen.

Eine zum Kochen verwendbare Mehrschichtfolie mit einer innen- und außenliegenden Propylen-enthaltenden Schicht, die zusätzlich bestrahlt wurde, beschreibt DE 3320584.

In EP 0573306 wird eine biaxialorientierte, schrumpffähige Mehrschichtfolie veröffentlicht, die eine innenliegende PA-Copolymerschicht enthält und ebenfalls bestrahlt wird.

Von Interesse sind ferner Mehrschichtfolien für Cook in-Anwendungen mit einer speziellen Barriereschicht z.B. gegen O₂-Permeation (CA 2 038 757, EP 0594918), die bestrahlt sind.

In AU 9 182 740 wird eine Mehrschichten-Cook in-Folie mit einer Coronabehandelten LLDPE-Siegelschicht beschrieben.

EP526814 betrifft eine Verbundfolie aus einer oder mehreren Schichten Polyamid sowie einer oder mehreren olefinischen Schichten, die durch Coextrusion, Klebstoffkaschierung oder Extrusionsbeschichtung oder Extrusionskaschierung miteinander verbunden sind und für das Verformen auf sogenannten Form-, Füll- und Verschließmaschinen besonders gut geeignet sind.

Wie aus dieser Übersicht erkennbar, ist es nach dem Stand der Technik zwingend notwendig, Folien für Cook in-Anwendungen mit Bestrahlung oder Corona-Behandlung oder einer ähnlichen Oberflächenbehandlung herzustellen, um insbesondere eine für Cook in-Anwendungen gewünschte Bräthaftung zu erzielen. Dies stellt nachteilig einen zusätzlichen Verfahrensschritt bei der Herstellung dar.

Es stellt sich daher die Aufgabe, eine tiefziehbare und siegelbare Folie bereitzustellen, bei der eine zusätzliche Bestrahlung oder Corona-Behandlung bei der Folienherstellung nicht notwendig ist, bei der die Anforderungen bei der Anwendung als Cook in-Folie erfüllt sind und bei der eine gewünschte Bräthaftung zwischen Folie und Füllgut erreicht wird.

Die Folie muß tiefziehbar und siegelfähig und damit auf modernen Tiefziehautomaten für Verpackungsanwendungen einsetzbar sein. Die Folie muß daher auch hinreichend gute Gleiteigenschaften besitzen.

Die Folie muß den bei der Weiterverarbeitung von Kochpökelwaren auftretenden thermischen und mechanischen Belastungen widerstehen. Das bedeutet, daß die Folien beständig gegen Delamination sein müssen, d. h. die Schichten, die den Film bilden, dürfen sich nicht voneinander trennen. Zusätzlich müssen die hitzeverschlossenen Nähte einem Aufreißen widerstehen.

Die Folie muß unter Hitze schrumpfbar sein, um sich eng an das Füllgut anzuschmiegen und sie muß eine gewünschte Haftung mit dem Füllgut aufweisen. Zusätzlich sollte möglichst sich möglichst wenig Gelee bilden und absetzen.

Überraschenderweise gelang dies durch eine mehrschichtige Folie, mit dem Schichtenaufbau A1 / B1 / A2 / C / D, die dadurch gekennzeichnet ist, daß
A1) eine Polyamid-Schicht (PA),
B1) eine Haftvermittler-Schicht (HV1),
A2) eine Polyamid-Schicht (PA),
C) eine Haftvermittler-Schicht (HV2), die gegebenenfalls aus 2 Schichten aus verschiedenen oder gleichen Materialien besteht,
D) eine Siegel-Schicht (I) aus einem Ionomer der Zink-Type ist,
   daß die Folie tiefziehbar und siegelbar ist und daß weitere übliche Hilfs- und Zusatzstoffe in den einzelnen Schichten vorhanden sein können. Die Folie eignet sich insbesondere zur Verwendung bei der Herstellung von Kochpökelwaren.

Die vorliegende Erfindung betrifft die Verwendung einer mehrschichtigen siegel- und tiefziehbaren Folie mit dem Schichtenaufbau A1/B/A2/C/D aus
A1) einer Polyamid-Schicht (PA),
B1) einer Haftvermittler-Schicht (HV1),
A2) einer Polyamid-Schicht (PA),
C) einer Haftvermittler-Schicht (HV2), die gegebenenfalls aus 2 Schichten mit verschiedenen oder gleichen Materialien besteht,
D) einer Siegel (I)-Schicht aus einem lonomer der Zink-Type
   und weiteren üblichen Hilfs- und Zusatzstoffen in den einzelnen Schichten zur Herstellung von Kochpökelware.

Übliche Hilfs- und Zusatzstoffe können den polymeren Rohstoffen zugesetzte Stabilisatoren, Verarbeitungshilfsstoffe, Gleitmittel, Antiblockmittel u.ä. sein.

Das Polyamid besteht aus den aliphatischen Polyamiden PA 6, PA 11, PA 12, PA 6.66, PA 6.8, PA 6.9, PA 6.10, PA 6.11, PA 6.12, einen Copolymer aus den darin enthaltenen Monomereinheiten, aus einem aromatischen oder teilaromatischen Polyamid oder aus einer Mischung der genannten Polyamide.

Vorzugsweise wird Polyamid 6 oder Mischungen von Polyamid 6 und einem aromatischen Polyamid verwandt, wobei das Verhältnis von PA6 zum aromatischen Polyamid 90:10 bis 80:20 beträgt.

Ein erfindungsgemäß geeigneter Haftvermittler ist ein anhydridmodifiertes Polyethylen, ein Säurecopolymer des Ethylen, wie z.B. EAA oder EMAA, ein säuremodifiziertes Ethylenvinylacetat, ein säuremodifiziertes Ethylen(meth)acrylat, anhydridmodifiziertes Ethylen(meth)acrylat, ein anhydridmodiziertes Ethylenvinylacetat, ein säure-/acrylatmodifiziertes Ethylenvinylacetat oder ein Polymerblend, enthaltend mindestens einen der oben genannten Haftvermittler. Der Haftvermittler der Schicht HV1 ist bevorzugt ein MSA (Maleinsäureanhydrid)-gepfropftes Linear Low Density Polyethylen (LLDPE) mit einem MFI (Melt Flow Index) von 0,1 bis 20 g/min (190°C; 2,16 kg) und oder der Haftvermittler der Schicht HV2 ist bevorzugt ein Ethylen(meth)acrylat (E(M)AA). Alternativ besteht der Haftvermittler der Schicht HV2 aus einer MSA-gepfropften LDPE-Schicht und einer E(M)AA-Schicht, wobei letzteres vorzugweise in der Schicht angrenzend an die Siegelschicht anzuordnen ist.

Ionomere sind "ionisch vernetzte Mischpolymerisate aus Ethylen, Propylen, Butylen, Vinylestern und ungesättigten aliphatischen Säuren, deren Salzen und deren Estern" (siehe Empfehlung XXXV. des Bundesgesundheitsamtes, 43. Lieferung, S. 114b, Carl Heymanns Verlag, Köln, Juni 1994). Erfindungsgemäß ist das Ionomer ein ionisch mit Zink-Salzen vernetztes Mischpolymerisat von Ethylen und ungesättigten aliphatischen Säuren oder ein Polymerblend mit diesen genannten ionisch vernetzten Mischpolymerisaten mit unvernetzten Mischpolymerisaten aus Polyolefinen und/oder -säuren und/oder -estern.

Bevorzugt sind Folien, die in mindestens einer Außenschicht bis zu 1 %, bevorzugt bis zu 0,5 % eines Gleitmittel und oder Aritiblockmittel enthalten, wobei besonders bevorzugt das Gleitmittel der Siegelschicht zugesetzt wird und ein Fettsäurederivat (z.B. Amidwachs wie beispielsweise Nonyloctylpalmitat-Amidwachs) ist und oder wobei besonders bevorzugt das Antiblockmittel der Außenschicht A1 zugesetzt wird und ein modifiziertes natürliches Kieselsäureprodukt ist.

Mindestens eine Schicht der erfindungsgemäßen Folien kann auch eingefärbt oder bedruckt sein.

Weitere zusätzliche Verfahrensschritte wie z.B. Bestrahlung, Corona-Behandlung oder andere Oberflächenbehandlungen sind erfindungsgemäß nicht notwendig, jedoch denkbar.

Im Prinzip sind auch Folienaufbauten möglich, die weitere Schichten oder Mischungen der angebenden Substanzen enthalten ohne die prinzipiellen Eigenschaften der Folie grundlegend zu ändern, d.h. ohne die Grundsätze und den Umfang der Erfindung zu verlassen, wie dem Fachmann leicht verständlich ist.

Überraschenderweise ist es durch die erfindungsgemäße Zusammensetzung der Folie gelungen, die besonderen Anforderungen beim Einsatz als Cook in-Folie zu erfüllen.

Durch den erfindungsgemäßen Mehrschichtenaufbau gelingt es, eine sehr gute Tiefziehbarkeit und ein gutes Schrumpfvermögen zu erreichen.

Es war nicht zu erwarten, daß auch ohne Bestrahlung oder Corona-Behandlung eine Folie herzustellen ist, die die gewünschte Bräthaftung aufweist.

Durch den erfindungsgemäßen Aufbau wird außerdem die erforderliche Delaminierfestigkeit erreicht.

Es war nicht abzusehen, daß durch den Aufbau der Folie und insbesondere durch das ausgewählte Ionomer der Zn-Type eine deutliche Verminderung der Geleebildung und die gewünschte leichte Bräthaftung erreicht wird.

Als Verfahren zur Herstellung der Folie kommen übliche Folienherstellungsverfahren wie Blasfilm- oder Flachfilmcoextrusion infrage. Besonders bevorzugt wird die Flachfilmcoextrusion mit in line-Coextrusionsbeschichtung.

Ist keine Möglichkeit der Coextrusion gegeben, ist die Einzelfertigung der Schichten A1, A2, D denkbar, wobei diese Schichten mittels Klebkaschierung miteinander zu verbunden sind. Der Kaschierkleber - üblicherweise wird ein 2-Komponenten-Polyurethan-Klebstoffsystem eingesetzt - übernimmt in diesem Fall die Haftvermittlerfunktion.

Eine Bestrahlung oder Corona-Behandlung der Folie oder einzelner Schichten wird nicht durchgeführt.

Zur Beurteilung der erfindungsgemäßen Folien wurden als Merkmale insbesondere die Tiefziehbarkeit herangezogen, sowie die Geleebildung bzw. der Geleeabsatz und die Bräthaftung, wie sie nach der Herstellung von Kochpökelwaren zu beobachten sind.

Zur Ermittlung der Tiefziehbarkeit wurden die gefertigten Folienmuster auf modernen Tiefziehautomaten, wie sie in der Verpackungsindustrie Anwendung finden (z.B. Tiromat, Multivac), getestet. Dazu wurden in der Maschine eingespannte Folienbahnen abschnittsweise über einer Heizplatte erwärmt. Die Wärme kann dazu entweder von der Siegelseite oder auch von der der Siegelseite abgewandten Seite der Folie erfolgen. Die mit Heizplattentemperaturen von ca. 70 bis 100°C vorgewärmten Folien wurden anschließend durch Anlegen eines Vakuums in eine Mulde mit dem Rahmenmaß 185 x 115 mm gezogen. Die Tiefe der Mulde wurde zwischen 20 und 70 mm variiert.

Das Tiefziehergebnis wurde dazu wie folgt beurteilt:
1. Das Tiefziehergebnis ist mangelhaft, eine nicht akzeptable Anzahl von Versuchen, eine Mulde zu formen, führt zu Aufrissen in der Folie: Merkmal: "-"
2. Das Tiefziehergebnis ist gut, es treten keine Aufrisse auf und die Ausformung der Mulde ist zufriedenstellend: Merkmal: "+"
3. Das Tiefziehergebnis ist sehr gut, es treten keine Aufrisse auf und die Ausformung der Mulde ist sehr gut: Merkmal: "++"

In einem anderen Versuch wurde eine für Kochpökelwaren geeignet vorbereitete Fleischmasse in die wie oben beschriebenen Folienmulden gefüllt. Die Mulden wurden dann weiter mit einer geeigneten Deckelfolie unter Anwendung von Vakuum und Hitzeerwärmung der Randbereiche (Rahmenversieglung) verschlossen. Diese einzelnen Packungen wurden dann in einer mit Heißdampf temperierbaren Kammer über ca. 12 Stunden kontrolliert bis auf eine Kerntemperatur, gemessen im Inneren des Füllguts, von 70°C erwärmt. Nach dem Abkühlen wurden die Packungen untersucht und insbesondere die Geleebildung bzw. der Geleeabsatz und die Bräthaftung beurteilt.

### Beurteilung des Geleeabsatzes:

Geleeabsatz: Hierunter wird die Separation von aus der Fleischmasse ausgetretenen Flüssigkeit zwischen Folie und Oberfläche der Fleischmasse verstanden:
- 1. sehr gut, da kein Geleeabsatz,: Merkmal: "kein"
- 2. gut, da nur geringer Geleeabsatz,: Merkmal: "gering"
- 3. starker Geleeabsatz, nicht akzeptabel,: Merkmal: "stark"
- 4. sehr starker Geleeabsatz, ebenfalls nicht akzeptabel:: Merkmal: "sehr stark"

### Beurteilung der Bräthaftung:

- 1. "keine" Bräthaftung:: Die Folie fällt beim Öffnen der Verpackung fast vom Füllgut.
- 2. "geringe" Bräthaftung.: Im Gegensatz zu "keiner Bräthaftung" liegt hier punktuell Bräthaftung vor. Die Folie gleitet leicht vom Füllgut.
- 3. "mittlere" Bräthaftung - wie gewünscht:: Die Folie läßt sich mit geringem Kraftaufwand ohne Beschädigung des Füllguts vom Füllgut entfernen.
- 4. "starke" Bräthaftung:: Die Folie läßt sich mit stärkerem Kraftaufwand nur unter kleinflächiger Beschädigung des Füllgutes (Herausrupfen von Fleisch) entfernen.
- 5. "sehr starke" Bräthaftung:: Die Folie läßt sich mit noch stärkerem Kraftaufwand nur unter großflächiger Beschädigung des Füllgutes entfernen.

### Beispiele und Vergleichsbeispiele

### A Beispiel 1

Eine erfindungsgemäße mehrschichtige Folie mit dem Aufbau
A1 / B1 / A2/ C / D
PA / HV1 / PA / HV1 / HV2/ I
32 / 10 / 32 / 10 / 54 / 17 µm,
der mit einer Flachfilm-Coextrusion mit in line-Beschichtungs-Coextrusion hergestellt wurde.
In diesem Fall ist C zwei-schichtig (HV1/HV2) ausgeführt.
Als Polyamid der Schicht PA wurde nukleiertes Polyamid 6 der Dichte 1140 kg/m³ mit einem Kristallitschmelzpunkt 219°C, gemischt mit einem aromatischen Polyamid der Dichte 1190 kg/m³ und einer Glasübergangstemperatur von 127°C (ASTM D-3418) im Verhältnis PA 6 zu aromatischem PA von 85 zu 15 eingesetzt, als Haftvermittler der Schicht HV1 ein Maleinsäureanhydridgepfropftes Linear Low Density Polyethylen (LLDPE) der Dichte 910 kg/m³ mit dem Kristallitschmelzpunkt 125°C verwandt. Der Haftvermittler der Schicht HV2 ist ein EMAA mit einem Kristallitschmelzpunkt 104°C und einer Dichte von 930kg/m³. Das Ionomer der Schicht D ist ein Ionomer der Zink-Type mit einer Dichte von 950 kg/m³ und einem Kristallitschmelzpunkt von 94°C.

Die Folie wurde weder bestrahlt noch Corona-behandelt.

### B Beispiel 2

Eine erfindungsgemäße mehrschichtige Folie wie Beispiel 1 mit dem Unterschied, daß die Schichtdicken
38 / 10 / 38 /10 / 63 / 21 µm betragen.

Die Folie wurde weder bestrahlt noch Corona-behandelt.

### C Beispiel 3

Eine erfindungsgemäße mehrschichtige Folie wie Beispiel 1, mit dem Unterschied, daß die Schichtdicken
40 / 10 / 40 / 10 / 75 / 25 µm betragen und die außenliegende PA-Schicht zusätzlich 3 % eines Additives enthält, daß die Gleitfähigkeit der Folie erhöht.

Die Folie wurde weder bestrahlt noch Corona-behandelt.

### D Vergleichsbeispiel 1

Eine mehrschichtige Folie mit dem Aufbau
A1 / B1 / A2/ C / D
PA / HV1 / PA / HV1 / HV2 / I
32 / 10 / 32 / 10 / 54 / 17 µm.
Es wurden die gleichen Rohstoffe wie bei der erfindungsgemäßen Folie verwandt mit dem Unterschied, daß in der Schicht D ein Ionomer der Natrium-Type mit der Dichte 940 kg/m³ und einem Kristallitschmelzpunkt von 99°C.

Die Folie wurde weder bestrahlt noch Corona-behandelt.

### E Vergleichsbeispiel 2

Eine mehrschichtige Folie mit dem Aufbau
A1 / B1 / A2/ C / D
PA/HV1/PA/HV1/HV2/Siegelschicht
25 / 10 / 25 / 10 / 75 / 25 µm.
Die Schicht D besteht nicht aus einem Ionomer, sondern aus einem Ethylenvinylacetat-Copolymer mit einer Dichte von 925 kg/m³ und einem Kristallitschmelzpunkt von 101°C.

Die Folie wurde weder bestrahlt noch Corona-behandelt.

### F Vergleichsbeispiel 3

Eine mehrschichtige Folie mit dem Aufbau
PA/Kleber/I
70/ - / 85 µm.
Die Schichten PA und I wurden zunächst separat mit einer Blasfilmextrusionsanlage hergestellt und anschließend durch Klebstoff-kaschierung verbunden. Es wurden das gleiche Polyamid und das gleiche Ionomer wie in Beispiel 1 benutzt. Als Kleber wird ein üblicher lösungsmittelhaltiger Kleber mit einem Auftrag von etwa 3,5g/m² verwandt.

Die Folie wurde weder bestrahlt noch Corona-behandelt.

Bei allen Packungen wurde als Deckelfolie eine handelsübliche Mehrschichtfolie Combitherm XXI der Wolff Walsrode AG, Bomlitz, mit einer Gesamtschichtdicke von 80 µm eingesetzt. In der vergleichenden Bewertung wurde nur der Muldenbereich beurteilt.

**Tabelle 1**

| Folie | Tiefziehbarkeit | Geleeabsatz | Bräthaftung |
|---|---|---|---|
| A Beispiel 1 | ++ | kein | mittel |
| B Beispiel 2 | ++ | kein | mittel |
| C Beispiel 3 | ++ | kein | mittel |
| D Vergleich 1 | ++ | stark | gering |
| E Vergleich 2 | + | sehr stark | keine |
| F Vergleich 3 | + | stark | gering |

Alle erfindungsgemäßen Folien zeigten im Gegensatz zu den Vergleichsbeispielen sehr gute Tiefzieheigenschaften. Sie wiesen nach der thermischen und mechanischen Belastung des Kochvorganges keine Delamierungen auf. Diesen Belastungen widerstanden auch die Siegelnähte der Packungen mit den erfindungsgemäßen Folien. Alle Siegelnähte blieben vollständig verschlossen. Die erfindungsgemäßen Folien wiesen nach dem Kochvorgang keinen Geleeabsatz auf. Ferner besaßen sie eine gewünschte mittlere Bräthaftung zum Füllgut, so daß sich die Folie wie gewünscht mit einem geringen Kraftaufwand ohne Verletzungen des Füllgutes von diesem trennen ließ.

Vergleichsbeispiel 1 besitzt einen ähnlichen Aufbau wie die erfindungsgemäßen Folien und zeigt ebenso eine sehr gute Tiefziehbarkeit. Dieser Aufbau allein reicht offensichtlich jedoch nicht aus, um die gewünschten Anforderungen bei der Herstellung von Kochpökelwaren zu erfüllen, denn diese Folie besitzt einen starken Geleeabsatz und nur eine geringe Bräthaftung.

Folien nach Vergleichsbeispiel 2 weisen eine ähnliche Schichtfolge wie die erfindungsgemäßen Folien auf. Diese Folien besitzen eine gute Tiefziehbarkeit. zeigten unerwünschten, sehr starken Geleeabsatz und keine Bräthaftung.

Folien nach Vergleichsbeispiel 3 besitzen ebenso wie die erfindungsgemäßen Folien ein Ionomer der Zink-Type als Siegelschicht, jedoch eine ganz anderen Aufbau und sie weisen nur gute Tiefzieheigenschaften auf. Das Ionomer der Zink-Type allein reicht für gute Eigenschaften bei der Beurteilung von Geleeabsatz und Bräthaftung nicht aus. Denn Folien nach Vergleich 3 führten zu starken Geleeabsatz und nur zu geringer Bräthaftung.

Es wird deutlich, daß sich sehr gute Tiefzieheigenschaften, gewünschte Bräthaftung und kein Geleeabsatz nur durch den erfindungsgemäßen Folienaufbau gekennzeichnet durch die Schichtenfolge der genannten Polymere erzielen lassen.

## Patentansprüche

1. Verwendung einer mehrschichtigen siegel- und tiefziehbaren Folie mit dem Schichtenaufbau A1/B/A2/C/D aus
A1) einer Polyamid-Schicht (PA),
B1) einer Haftvermittler-Schicht (HV1),
A2) einer Polyamid-Schicht (PA),
C) einer Haftvermittler-Schicht (HV2), die gegebenenfalls aus 2 Schichten mit verschiedenen oder gleichen Materialien besteht,
D) einer Siegel (1)-Schicht aus einem Ionomer der Zink-Type
und weiteren üblichen Hilfs- und Zusatzstoffen in den einzelnen Schichten zur Herstellung von Kochpökelware.

2. Verwendung nach Anspruch 1, wobei das Polyamid (PA) aus den aliphatischen Polyamiden PA 6, PA 11, PA 12, PA 6.66, PA 6.8, PA 6.9, PA 6.10, PA 6.11, PA 6.12, einen Copolymer aus den darin enthaltenen Monomereinheiten, aus einem aromatischen oder teilaromatischen Polyamid oder aus einer Mischung der genannten Polyamide besteht.

3. Verwendung nach den Ansprüchen 1 oder 2, wobei der Haftvermittler (HV) ein anhydridmodifiziertes Polyethylen, ein Säurecopolymer des Ethylen, ein säuremodifiziertes Ethylenvinylacetat, ein säuremodifiziertes Ethylen(meth)acrylat, ein anhydridmodifziertes Ethylenvinylacetat, ein anhydridmodifiziertes Ethylen(meth)acrylat, ein säure/acrylatmodifiziertes Ethylenvinylacetat oder ein Polymerblend ist, enthaltend mindestens einen der in diesem Anspruch genannten Haftvermittler.

4. Verwendung nach einem der Ansprüche 1 bis 3, wobei das Ionomer (I) ein ionisch mit Zink-Salzen vernetztes Mischpolymerisat von Ethylen und ungesättigten aliphatischen Säuren, oder ein Polymerblend mit diesen genannten ionisch vernetzten Mischpolymerisaten mit unvernetzten Mischpolymerisaten aus Polyolefinen und/oder -säuren und/oder -estern ist.

5. Verwendung nach einem der Ansprüche 1 bis 4, wobei die Gesamtschichtdicke der Folie 50 bis 300 µm, vorzugsweise 150 bis 240 µm beträgt und die Schichtdicken der Schicht
| | |
|---|---|
| A1 | 15 - 25%, |
| B1 | 3 - 10% |
| A2 | 15 - 25% |
| C | 25 - 55% |
| D | 5 - 25%, |
bezogen auf die Gesamtschichtdicke betragen.

6. Verwendung nach einem der Ansprüche 1 bis 5, wobei mindestens eine Außenschicht der Folie bis zu 1 Gew.-%, bevorzugt bis zu 0,5 Gew.-% eines Gleitmittels und oder Antiblockmittels enthält.

## Claims

1. Use of a multilayered sealable and thermoformable film with the layer build up A1/B/A2/C/D of
A1) a polyamide layer (PA),
B1) an adhesion promoter layer (AP1),
A2) a polyamide layer (PA),
C) an adhesion promoter layer (AP2) which optionally comprises 2 layers with different or identical materials,
D) a sealing (I) layer of an ionomer of the zinc type
and further conventional auxiliary substances and additives in the individual layers, for the production of salted cook-in products.

2. Use according to claim 1, wherein the polyamide (PA) comprises the aliphatic polyamides PA 6, PA 11, PA 12, PA 6.66, PA 6.8, PA 6.9, PA 6.10, PA 6.11, PA 6.12, a copolymer of the monomer units contained therein, an aromatic or partly aromatic polyamide or a mixture of the polyamides mentioned.

3. Use according to claims 1 or 2, wherein the adhesion promoter (AP) is an anhydride-modified polyethylene, an acid copolymer of ethylene, an acid-modified ethylene-vinyl acetate, an acid-modified ethylene (meth)acrylate, an anhydride-modified ethylene-vinyl acetate, an anhydride-modified ethylene (meth)acrylate, an acid/acrylate-modified ethylene-vinyl acetate or a polymer blend comprising at least one of the adhesion promoters mentioned in this claim.

4. Use according to one of claims 1 to 3, wherein the ionomer (I) is a copolymer of ethylene and unsaturated aliphatic acids crosslinked ionically with zinc salts, or a polymer blend with these ionically crosslinked copolymers mentioned with non-crosslinked copolymers of polyolefins and/or -acids and/or -esters.

5. Use according to one of claims 1 to 4, wherein the total layer thickness of the film is 50 to 300 µm, preferably 150 to 240 µm and the layer thicknesses of the layer are as follows
| | |
|---|---|
| A1 | 15 - 25% |
| B1 | 3 - 10% |
| A2 | 15 - 25% |
| C | 25 - 55% |
| D | 5 - 25% |
based on the total layer thickness.

6. Use according to one of claims 1 to 5, wherein at least one outer layer of the film comprises up to 1 wt.%, preferably up to 0.5 wt.% of a lubricant and/or antiblocking agent.

## Revendications

1. Utilisation d'une feuille multicouche soudable et emboutissable, à la structure de couches A1/B/A2/C/D dans laquelle
A1) est une couche de polyamide (PA),
B1) est une couche d'agent d'adhérence (AA1)
A2) est une couche de polyamide (PA),
C) est une couche d'agent d'adhérence (AA2) qui le cas échéant peut consister en deux couches de matières identiques ou différentes,
D) est une couche de soudure (I) consistant en un ionomère du type zinc, avec d'autres produits auxiliaires et additifs usuels dans les diverses couches, pour la préparation de salaisons.

2. Utilisation selon la revendication 1, dans laquelle le polyamide PA consiste en les polyamides aliphatiques PA 6, PA 11, PA 12, PA 6,66, PA 6,8, PA 6,9, PA 6,10, PA 6,11, PA 6,12, un copolymère des mêmes motifs monomères, un polyamide aromatique ou partiellement aromatique ou un mélange des polyamides mentionnés.

3. Utilisation selon la revendication 1 ou 2, dans laquelle l'agent d'adhérence AA est un polyéthylène à modification anhydride, un copolymère acide de l'éthylène, un éthylène-acétate de vinyle à modification acide, un éthylène-(méth)acrylate à modification acide, un éthylène-acétate de vinyle à modification anhydride, un éthylène-(méth)acrylate à modification anhydride, un éthylène-acétate de vinyle à modification acide/acrylate ou un mélange de polymères contenant au moins un des agents d'adhérence cités dans la présente revendication.

4. Utilisation selon l'une des revendications 1 à 3, dans laquelle l'ionomère (I) est un copolymère de l'éthylène et d'acides aliphatiques insaturés qui a subi une réticulation ionique par des sels de zinc ou un mélange de polymères contenant ces copolymères à réticulation ionique avec des copolymères non réticulés de polyoléfines et/ou d'acides polyoléfiniques et/ou d'esters polyoléfiniques.

5. Utilisation selon l'une des revendications 1 à 4, dans laquelle l'épaisseur totale des couches de la feuille va de 50 à 300 µm, de préférence de 150 à 240 µm et les épaisseurs respectives des couches individuelles représentent
| | |
|---|---|
| A1 | 15 à 25 % |
| B1 | 3 à 10 % |
| A2 | 15 à 25 % |
| C | 25 à 55 % |
| D | 5 à 25 % |
de l'épaisseur totale des couches.

6. Utilisation selon l'une des revendications 1 à 5, dans laquelle au moins une couche extérieure de la feuille contient jusqu'à 1 % en poids, de préférence jusqu'à 0,5 % en poids d'un agent lubrifiant et/ou d'un agent anti-adhérence.
